# EUROPEAN PATENT APPLICATION

(11) **EP 4 390 606 A1**
(43) Date of publication of application: **26.06.2024**
(21) Application number: 22214966.8
(22) Date of filing: 20.12.2022
(51) Int. Cl.: G05D 23/19

(54) **METHOD AND SYSTEM FOR CONTROLLING USE OF ENERGY**

(71) Applicant: OptiWatti Oy, 02240 Espoo (FI)
(72) Inventor: Marjeta, Juha, Espoo (FI); Hietala, Sakari, Kiviniemi (FI); Jokelainen, Jan, Lappeenranta (FI); Savola, Jussi, Espoo (FI); Tuohimaa, Mikko, Pori (FI)
(74) Representative: Moosedog Oy

(57) **Abstract**

Disclosed is a method for controlling use of energy in a premises having space(s) The method comprises defining a temperature profile for each space(s); defining temperature-regulation mode(s) for each space(s); assigning a temperature-regulation mode from the temperature-regulation mode(s), to each space(s); identifying a current energy-availability data for the pre-determined time period of the day; comparing the current energy-availability data with the average mode-specific energy-availability data to determine a deviation within the allowable pre-defined range of deviation of the energy-availability data; and regulating temperature of each space(s) to attain the pre-defined range of deviation of temperature.

## Description

### TECHNICAL FIELD

The present disclosure relates to methods for controlling use of energy in a premises having one or more spaces. The present disclosure relates to systems for controlling use of energy in a premises having one or more spaces.

### BACKGROUND

Energy, like electrical energy, is a crucial part of contemporary life and important to global economy. Energy is used in all dimensions of life, such as for lighting, machinery, electronics, public transportation systems, and the like. Conventionally, buildings consume a major percentage (i.e., about 50%) of total production of energy. Recent advancements in technology have paved the way for constructing smart buildings, which uses energy extensively. Herein, the smart buildings use technology to enable efficient and economic use of energy resources, and use automated processes to automatically control temperature regulating devices in the smart building.

Due to the presence of numerous temperature-regulating devices in the smart building, regulation of their thermostats is laborious and inconvenient. Hence, the temperature often remains constant throughout the day, which leads to unnecessary consumption of energy by the smart building. Moreover, the consumption of energy by buildings which do not belong in the category of the smart buildings (such as, for example, old buildings), cannot be always accurately determined or stated, or this can be challenging. This makes it difficult to generate savings on an energy bill as the temperature is always set as a constant value. Hence, even when a room inside the building is not in use, the room still continues to maintain the temperature unnecessarily. This leads to wastage of energy, and simultaneously increases a cost of living. In some cases, there may be electrical surges due to constant functioning of the temperature-regulation devices in the building, which eventually leads to overheating of circuit wiring of said devices and causes short-circuits.

Therefore, in the light of aforementioned discussion, there exists a need to overcome the aforementioned drawbacks associated with managing temperature / energy usage in premises or property.

### SUMMARY

The present disclosure seeks to provide a method for controlling use of energy (like electrical energy or energy in another form) in a premises having one or more spaces. The present disclosure also seeks to provide a system for controlling use of energy (like electrical energy or energy in another form) in a premises having one or more spaces.

An aim of the present disclosure is to provide a solution that overcomes at least partially the problems encountered in prior art.

In a first aspect, the present disclosure provides a method for controlling use of energy in a premises having one or more spaces, the method comprising:
- defining a temperature profile, corresponding to temperature values set by a user for a time period of a day, for each of the one or more spaces;
- defining one or more temperature-regulation modes for each of the one or more spaces, wherein each of the one or more temperature-regulation modes comprises:
   - an allowable pre-defined range of deviation of an energy-availability data from an average mode-specific energy-availability data, and
   - an allowable pre-defined range of deviation of temperature from the temperature values set by the user, for the allowable pre-defined range of deviation of the energy-availability data;
- assigning a temperature-regulation mode from the one or more temperature-regulation modes, to each of the one or more spaces;
- identifying a current energy-availability data for the pre-determined time period of the day;
- comparing the current energy-availability data with the average mode-specific energy-availability data to determine a deviation within the allowable pre-defined range of deviation of the energy-availability data; and
- regulating temperature of each of the one or more spaces to attain the pre-defined range of deviation of temperature based on the determined deviation within the allowable pre-defined range of deviation of the energy-availability data to control the use of energy in the premises.

In a second aspect, the present disclosure provides a system for controlling use of energy in a premises having one or more spaces, the system comprising a processor communicably coupled to a plurality of thermostats associated with heating or cooling units of the premises, wherein the processor is configured to:
- define a temperature profile, corresponding to temperature values set by a user for a time period of a day, for each of the one or more spaces;
- define one or more temperature-regulation modes for each of the one or more spaces, wherein each of the one or more temperature-regulation modes comprises:
   - an allowable pre-defined range of deviation of an energy-availability data from an average mode-specific energy-availability data, and
   - an allowable pre-defined range of deviation of temperature from the temperature values set by the user, for the allowable pre-defined range of deviation of the energy-availability data;
- assign a temperature-regulation mode from the one or more temperature-regulation modes, to each of the one or more spaces;
- identify a current energy-availability data for the pre-determined time period of the day;
- compare the current energy-availability data with the average mode-specific energy-availability data to determine a deviation within the allowable pre-defined range of deviation of the energy-availability data; and
- regulate temperature of each of the one or more spaces to attain the pre-defined range of deviation of temperature based on the determined deviation within the allowable pre-defined range of deviation of the energy-availability data to control the use of energy in the premises.

Embodiments of the present disclosure substantially eliminate or at least partially address the aforementioned problems in the prior art, and enable efficient control of energy to regulate the temperature of the one or more spaces, within the premises.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIG.1 is an illustration of a flowchart depicting steps of a method for controlling use of energy in a premises having one or more spaces, in accordance with an embodiment of the present disclosure;
FIG. 2 is an exemplary temperature profile in a graphical format, in accordance with an embodiment of the present disclosure;
FIG. 3 is an exemplary case of regulating temperature, in accordance with an embodiment of the present disclosure;
FIG. 4 is an exemplary histogram of controlling use of energy, in accordance with an embodiment of the present disclosure.
FIG. 5A, 5B and 5C, are exemplary user interfaces, in accordance with various embodiments of the present disclosure;
FIG. 6 is an exemplary floor plan of a premises, in accordance with an embodiment of the present disclosure; and
FIG. 7 is a block diagram of a system for controlling use of energy in a premises having one or more spaces, in accordance with an embodiment of the present disclosure.
In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a method for controlling use of energy in a premises having one or more spaces, the method comprising:
- defining a temperature profile, corresponding to temperature values set by a user for a time period of a day, for each of the one or more spaces;
- defining one or more temperature-regulation modes for each of the one or more spaces, wherein each of the one or more temperature-regulation modes comprises:
   - an allowable pre-defined range of deviation of an energy-availability data from an average mode-specific energy-availability data, and
   - an allowable pre-defined range of deviation of temperature from the temperature values set by the user, for the allowable pre-defined range of deviation of the energy-availability data;
- assigning a temperature-regulation mode from the one or more temperature-regulation modes, to each of the one or more spaces;
- identifying a current energy-availability data for the pre-determined time period of the day;
- comparing the current energy-availability data with the average mode-specific energy-availability data to determine a deviation within the allowable pre-defined range of deviation of the energy-availability data; and
- regulating temperature of each of the one or more spaces to attain the pre-defined range of deviation of temperature based on the determined deviation within the allowable pre-defined range of deviation of the energy-availability data to control the use of energy in the premises.

In a second aspect, the present disclosure provides a system for controlling use of energy in a premises having one or more spaces, the system comprising a processor communicably coupled to a plurality of thermostats associated with heating or cooling units of the premises, wherein the processor is configured to:
- define a temperature profile, corresponding to temperature values set by a user for a time period of a day, for each of the one or more spaces;
- define one or more temperature-regulation modes for each of the one or more spaces, wherein each of the one or more temperature-regulation modes comprises:
   - an allowable pre-defined range of deviation of an energy-availability data from an average mode-specific energy-availability data, and
   - an allowable pre-defined range of deviation of temperature from the temperature values set by the user, for the allowable pre-defined range of deviation of the energy-availability data;
- assign a temperature-regulation mode from the one or more temperature-regulation modes, to each of the one or more spaces;
- identify a current energy-availability data for the pre-determined time period of the day;
- compare the current energy-availability data with the average mode-specific energy-availability data to determine a deviation within the allowable pre-defined range of deviation of the energy-availability data; and
- regulate temperature of each of the one or more spaces to attain the pre-defined range of deviation of temperature based on the determined deviation within the allowable pre-defined range of deviation of the energy-availability data to control the use of energy in the premises.

The present disclosure provides the aforementioned method and the aforementioned system to control the use of energy in the premises. The temperature profile and the one or more temperature-regulation modes can be set by the user, or set automatically based on past usage. The temperature-regulation modes are assigned to the one or more spaces in such a way so as to control the use of energy to minimise expenditure. The temperature of each of the one or more spaces are regulated continuously for the time period of the day, so that in case a given space is not in use, then it is not required to maintain the temperature at a required temperature at that time instant. Hence, energy is not consumed for the given space at that time instant, thereby reducing costs of purchasing said energy. Advantageously, separate allowable deviations of energy-availability data from an average energy-availability data is set for each of the one or more spaces.

Throughout the present disclosure, the term "*premises*" refers to a house or a building. Examples of the premises may include, but are not limited to, a house (for example, such as a bungalow, a villa, an apartment, and the like), a housing complex (for example, a multistorey structure having multiple apartments), a hotel, a hospital, a commercial establishment (for example, such as a shop, a shopping mall, an office premises, and the like), an industrial building (for example, such as a workshop, factory). The premises comprises one or more spaces, wherein the term "*space*" refers to a room within the premises. The one or more spaces can be of same or of different dimensions. Examples of the one or more spaces may include, but are not limited to, a bedroom, a living room, a garage, and similar.

Throughout the present disclosure, the term "*temperature profile*" refers to the temperature values set by the user for the time period of the day based on the user's requirement, for each of the one or more spaces. Herein, the temperature values used to define the temperature profile can be same or different for each of the one or more spaces, throughout the time period of the day. A technical benefit of defining different temperature profiles for each of the one or more spaces for the time period of the day, is to minimise consumption of energy when the one or more spaces are not in use, thereby minimising a cost of purchasing said energy. The temperature profile of each of the one or more spaces is defined independent of each other. The temperature profile depends on factors, such as, for example, usage of the one or more spaces, time of the day, day of the week, and similar. The temperature profile for the time period of the day can be represented in the form of at least one of: a graph, a file, a table, and similar. It will be appreciated that, the time period of the day may be a minute, an hour, 2 hours, 4 hours, 12 hours, or 24 hours (a day).

Optionally, the temperature values set by the user for the one or more spaces depends on a fixed-space attribute and/or a variable-space attribute, of the one or more spaces. Herein, the term "*fixed-space attribute*" refers to a set of properties of the one or more spaces that are permanent or fixed with respect to time, and categorically contributes to a way the user sets the temperature values of each of the one or more spaces. Examples of the fixed-space attribute may include, but are not limited to, a layout of the premises, a floor plan of the premises, a number of doors and windows in each of the one or more spaces, a dimension of the doors and the windows, a day of a week, a time of the day. The term "*variable-space attributes*" refers to another set of properties of the one or more spaces that vary with respect to the time period, and also categorically contributes to a way the user sets the temperature values of each of the one or more spaces along with the fixed-space attributes. Examples of the variable-space attributes may include, but are not limited to, a weather forecast for a geolocation of the premises, environment conditions at the geolocation of the premises, a current temperature of the one or more spaces, a number of temperature-regulating devices, a position of the temperature-regulating devices in each of the one or more spaces, a power of temperature-regulating devices, an efficiency of the temperature-regulating devices. Hence, based on the fixed-space attributes and the variable-space attributes, the temperature profile of each of the one or more spaces can be set by the user for the time period of the day, which can further be utilized to set the temperature profile for each week of a month.

As a first example, an exemplary temperature profile may be defined for a given space. Herein, temperature values set by a user for the given space from 11 pm to 6 am is 10 degrees Celsius, from 6 am to 1 pm is 19 degrees Celsius, from 1 pm to 6 pm is 20 degrees Celsius, and from 6 pm to 11 pm is 19 degrees Celsius.

Throughout the present disclosure, the term "*temperature-regulation mode*" refers to a manner in which a temperature of each of the one or more spaces is regulated with respect to the energy-availability data for the time period of the day. The one or more temperature-regulation modes are defined for each of the one or more spaces so as to regulate the temperature of each of the one or more spaces at different time periods of the day, and/or different days of the week, by considering the fixed-space attributes and the variable-space attributes. Moreover, the temperature-regulation mode has an impact on an energy bill of the premises. In the temperature-regulation mode, when a current temperature of each of the one or more spaces deviates from the temperature values set by the user by a degree Celsius, the energy bill is impacted by an increment or a reduction (such as, a reduction by 5% of a total amount) of the energy bill. As an example, with every 1-degree Celsius lowering of temperature of a given space, the energy bill is reduced by 5%.

Optionally, the temperature profile and the one or more temperature-regulation modes can be defined by the user using a user interface on a user device. The "*user device*" relates to an electronic device that is capable of displaying the user interface. The user device is associated with (or, used by) a person and is capable of enabling the person to perform specific tasks associated with the method. The user interface facilitates interaction of the user by one or more of a touch-sensitive screen of the user device, buttons on the user device, microphone on the user device, or similar. Examples of the user device include, but are not limited to, a touch screen television (TV), tablets, laptop computers, personal computers, cellular phones, personal digital assistants (PDAs), handheld devices, etc. Additionally, the user device includes a casing, a memory, a processor, a network interface card, a microphone, a speaker, a keypad, and a display. The term "*user interface*" relates to a structured set of user interface elements rendered on a display. Optionally, the interactive user interface is generated by any collection or set of instructions executable by the at least one processor. Additionally, the interactive user interface is operable to interact with the person to convey graphical and/or textual information and receive input from the person.

Throughout the present disclosure, the term *"energy-availability data"* refers to a forecast of an amount of energy available at an energy source (such as, for example, a power grid) that can be used by the premises in the time period of the day. The energy-availability data is hence, fixed in nature. The energy-availability data is in terms of a given unit of measurement. The given unit of measurement commonly used is kilowatt hour (kWh), but could also be watt hour (Wh), megawatt hour (MWh), gigawatt hour (GWh), joules (J), kilojoules (kJ), and the like.

Optionally, the energy-availability data is available to the user as energy price information of the time period of the day. The energy price information includes a spot price of energy, a transfer price, and tax. Herein, the term *"spot price"* refers to a current price of energy. The spot price is paid by the user for withdrawing energy from the energy source. Similarly, the term *"transfer price"* refers to a price paid by the user for transferring energy from the energy source. The energy price information is in terms of a given currency. The given currency commonly used is Euro (€), but could also be dollar ($), krona (kr), franc (CHF), and similar. Optionally, the energy-availability data is available to the user as a combination of the forecast of the amount of energy available at an energy source and the energy price information.

The one or more temperature-regulation modes have corresponding mode-specific energy-availability data for the time period of the day. Herein, the mode-specific energy-availability data can be in a form of at least one of: an amount of energy to be consumed by each of the one or more spaces, a limit (such as, for example, a budget) on expenditure on energy for each of the one or more spaces, for the time period of the day. Then, average mode-specific energy-availability data is determined, which is at least one of: an average of the amount of energy to be consumed by each of the one or more spaces, an average of the limit on expenditure on energy for each of the one or more spaces. The average mode-specific energy-availability data (the average price of energy) is either determined manually by the user, or automatically using a software, or a combination of both. Furthermore, the average mode-specific energy-availability data can be same or different for each of the one or more spaces. Optionally, the one or more temperature-regulation modes are also defined by an amount of deviation of the energy-availability data from the average mode-specific energy-availability data, wherein said deviation lies within the allowable pre-defined range. The range is pre-defined by the user, the software, or the combination of both. The allowable pre-defined range of deviation of an energy-availability data can be either greater than or lesser than the average mode-specific energy-availability data. In other words, the spot price of energy can be cheaper or expensive than the energy price information of the day, within the limit on expenditure on energy for the day. It will be appreciated that the deviation can be represented in terms of percentage (%).

As a second example, an exemplary average mode-specific energy-availability data may be 10 price unit (PU), and an exemplary allowable pre-defined range of deviation of an energy-availability data may be 25% cheaper (i.e., 7.5 PU), 40% cheaper (i.e., 6 PU), 25% expensive (i.e., 12.5 PU), 40% expensive (i.e., 14 PU), and similar, than the average mode-specific energy-availability data.

Simultaneously, the current temperature of each of the one or more spaces deviates from the temperature values set by the user for the time period of the day, wherein the deviation lies within the allowable pre-defined range of deviation of temperature, for the allowable pre-defined range of deviation of the energy-availability data. Herein, the allowable pre-defined range of deviation of temperature is set by the user, the software, or the combination of both, based on necessity of comfort by the user. The allowable pre-defined range of deviation of temperature is either positive or negative than the temperature values set by the user, for the allowable pre-defined range of deviation of the energy-availability data.

Continuing with reference to the second example, an exemplary allowable pre-defined range of deviation of temperature for the allowable pre-defined range of deviation of the energy-availability data may be when the allowable pre-defined range of deviation of an energy-availability data may be 25% cheaper, increasing temperature by 0.3 degree Celsius for heating (in other words, consuming energy to raise temperature, and vice-versa for cooling); when the allowable pre-defined range of deviation of an energy-availability data may be 40% cheaper, increasing temperature by 0.5 degree Celsius for heating; when the allowable pre-defined range of deviation of an energy-availability data may be 25% expensive, decreasing temperature by 1 degree Celsius for heating (in other words, reducing consumption of energy to decrease temperature, and vice-versa for cooling); when the allowable pre-defined range of deviation of an energy-availability data may be 40% expensive, decreasing temperature by 1.5 degrees Celsius for, from the temperature values set by a user.

As an example, when the price of energy (energy) is low or cheap, energy might be stored into the natural storages of a building (like the heating elements, water boilers, structures, or all other possible storages, where energy (heat) can be stored. And thus, when the price of energy (energy) is on a higher level/high, then the stored energy can be utilized from the storages (for example using the stored heated water, heat of the heating elements or heating devices, etc.). Also, it might be possible to store the energy(energy) in batteries (accumulators) and when the price of energy is high or on a high level, the then energy might be used for any purpose, like for example heating. The temperature-regulation mode is assigned to the one or more spaces based on the user's requirement. The user's requirement may be either comfort, or savings, or a combination of both. Herein, the term "*comfort*" refers to minimum deviation of temperature from the temperature values set by the user. The term "*savings*" refers to minimum deviation from the limit on expenditure on energy for each of the one or more spaces. The temperature-regulation mode is manually assigned by the user, or automatically assigned by a software, or a combination of both. Optionally, the temperature-regulation modes can be assigned appropriately to the one or more spaces when energy consumption of each of the one or more spaces is pre-known. Optionally, a temperature sensor is arranged in each of the one or more spaces to measure the temperature in each of the one or more spaces, to prevent unnecessary increasing or decreasing the temperature. Optionally, the one or more temperature-regulation modes can be displayed on the user interface, to assign the temperature-regulation modes to each of the one or more spaces.

The "*current energy-availability data*" refers to the spot price of energy at the predetermined time period of the day. It also optionally can mean that "current energy-availability data" is connected or means that there is pre-defined, limited usage, i.e how much power can be consumed or be used. The current energy-availability data is identified for a time instance as required by the user, for which the energy-availability data is available for the pre-determined time period of the day. The spot price of energy may be expensive or cheap with reference to a time of the day. Typically, the spot price of energy during non-peak hours is lesser than the spot price of energy during peak hours. Herein, the term "*non-peak hours*" refers to a time of the day when energy demand in a given area is high. Herein, the given area is larger than the premises, and the premises lies within the given area. In an instance, during the non-peak hours, the spot price of energy in a city may be £0.9 per kWh. Conversely, the spot price of energy in the city during peak hours may be £18.9 per kWh.

The current energy-availability data is compared with the average mode-specific energy-availability data, to determined amount of variation (i.e., deviation) is observed of the current energy-availability data with respect to the average mode-specific energy-availability data. In case, the deviation lies within the allowable pre-defined range of deviation of the energy-availability data, then the temperature is regulated based on the assigned temperature-regulation mode. Preferably, the energy is withdrawn from the energy source when the current energy-availability data is less than or equal to the average mode-specific energy-availability data. Optionally, the comparison of the current energy-availability data with the average mode-specific energy-availability data can be visually represented on the user interface in a graphical form, a textual form, a tabular form, and similar.

Continuing with reference to the third example, the current energy-availability data i.e., 13 PU, may be compared with the average mode-specific energy-availability data i.e., 10 PU. The deviation may be determined to be 30% expensive as compared to the average mode-specific energy-availability data.

Optionally, when the current energy-availability data is greater than or less than the average mode-specific energy-availability data, an allowable temperature value is selected from within the allowable pre-defined range of deviation of temperature for regulating temperature of each of the one or more spaces. Herein, the term "*allowable temperature value*" refers to a temperature value permitted by the user, based on the user's requirement. This allowable temperature value must vary from the temperature value set by the user, within the allowable pre-defined range of deviation of temperature. Hence, based on the deviation of the current energy-availability data from the average mode-specific energy-availability data, the allowable temperature value can be selected either manually by the user, or automatically by a software, or a combination of both. When the current energy-availability data is greater than the average mode-specific energy-availability data, it is preferred that the allowable temperature value is raised minimally and may not attain the temperature values set by the user. Alternatively, when the current energy-availability data is lesser than the average mode-specific energy-availability data, it is preferred that the allowable temperature value is raised significantly to attain the temperature values set by the user.

Optionally, when the current energy-availability data is greater than or less than the average mode-specific energy-availability data, any of: a lower temperature value, a higher temperature value, than the temperature values set by the user is selected, respectively, from within the allowable pre-defined range of deviation of temperature while heating the one or more spaces of the premises. Herein, the premises may be located at a geolocation, where an average temperature lies in a range from 0 degree Celsius to 5 degrees Celsius. Hence, when the current energy-availability data is greater than the average mode-specific energy-availability data, a lower temperature value than the temperature value set by the user is selected, to consume less energy, as the spot price at that time instant is expensive. This can be achieved by switching off heating devices arranged in each of the one or more spaces. Alternatively, when the current energy-availability data is lesser than the average mode-specific energy-availability data, a higher temperature value than the temperature value set by the user is selected, to consume more energy, as the spot price at that time instant is cheap. This can be achieved by switching on heating devices arranged in each of the one or more spaces.

Optionally, when the current energy-availability data is greater than or less than the average mode-specific energy-availability data, any of: a higher temperature value, a lower temperature value, than the temperature values set by the user is selected, respectively, from within the allowable pre-defined range of deviation of temperature while heating the one or more spaces of the premises. Herein, the premises may be located at a geolocation, where an average temperature lies in a range from 35 degrees Celsius to 45 degrees Celsius. Hence, when the current energy-availability data is greater than the average mode-specific energy-availability data, a higher temperature value than the temperature value set by the user is selected, to consume less energy, as the spot price at that time instant is expensive. This can be achieved by switching off cooling devices arranged in each of the one or more spaces. Alternatively, when the current energy-availability data is lesser than the average mode-specific energy-availability data, a lower temperature value than the temperature value set by the user is selected, to consume more energy, as the spot price at that time instant is cheap. This can be achieved by switching on cooling devices arranged in each of the one or more spaces.

Optionally, the one or more temperature-regulation modes comprises:
- a classic mode including a first allowable pre-defined ranges of deviations of the energy-availability data and a first allowable pre-defined ranges of deviation of temperatures;
- a saving mode including a second allowable pre-defined ranges of deviations of the energy-availability data and a second allowable pre-defined ranges of deviations of temperatures, wherein the second allowable pre-defined ranges are different than the first allowable pre-defined ranges; and
- an extreme-saving mode including a third allowable pre-defined ranges of deviations of the energy-availability data and a third allowable pre-defined ranges of deviation of temperatures, wherein the third allowable pre-defined ranges are different) than the first allowable pre-defined ranges.

In this regard, if any one of aforementioned temperature-regulation modes is chosen, the current energy-availability data is compared with the average mode-specific energy-availability data of the chosen mode (namely, the classic mode, the saving mode, and the extreme saving mode). Thus/Moreover, the deviation of the temperature from the temperature values set by the user is based on whether the deviation of the current energy-availability data from the average mode-specific energy-availability data lies within any one of the: first, second, third allowable pre-defined ranges of deviations of the energy-availability data. Herein, the one or more temperature regulation modes are written in increasing order of allowable pre-defined range of deviation of temperature, from the temperature values set by the user. As the first, second and third allowable pre-defined ranges of deviation of temperatures increases, it helps the user to at least one of: decrease or increase the amount of energy to be consumed by each of the one or more spaces, decrease the limit on expenditure on energy for each of the one or more spaces. Hence, the first, second and third allowable pre-defined ranges of deviations of the energy-availability data and the first, second and third first allowable pre-defined ranges of deviation of temperatures are different from each other, respectively.

Optionally, the classic mode deviates the temperature of each of the one or more spaces from the temperature value set by the user corresponding to the average classic mode-specific energy-availability data. In this mode, the first allowable pre-defined ranges of deviation of temperatures are closer to the temperature value set by the user for a given space. Hence, the temperature changes are small and very close in value to the temperature value set by the user, upon comparing the current energy-availability data with the average classic mode-specific energy-availability data. An exemplary range of the first allowable pre-defined ranges of deviation of temperatures may be from -1.5 degrees Celsius up to 0.5 degree Celsius when an exemplary range of the first allowable pre-defined ranges of deviations of an energy-availability data lies in a range of 25% cheaper, 40% cheaper, 25% expensive, or 40% expensive than the average classic mode-specific energy-availability data, in terms of energy price information.

In an instance, an exemplary temperature value set by the user for a given space may be 20 degrees Celsius. The user may assign the classic mode to the given space. The first allowable pre-defined ranges of deviation of temperatures may be from +0.3 degree Celsius up to -1.5 degrees Celsius, wherein '+' indicates raising the temperature (i.e., in a cold environment) from the temperature values and '-' indicates lowering the temperature from the temperature values. Hence, when comparing the current energy-availability data with the average classic mode-specific energy availability data and determining that the current energy-availability data is any one of: 25% cheaper, then increasing the temperature by 0.3 degree Celsius (i.e., 20+0.3 = 20.3 degrees Celsius); 40% cheaper, then increasing the temperature by 0.5 degree Celsius (i.e., 20+0.5 = 20.5 degrees Celsius); 25% expensive, then decreasing the temperature by 1 degree Celsius (i.e., 20-1 = 19 degrees Celsius); 40% cheaper, then decreasing the temperature by - 1.5 degrees Celsius (i.e., 20-1.5 = 18.5 degrees Celsius).

Optionally, the saving mode deviates the temperature of each of the one or more spaces from the temperature value set by the user corresponding to the average saving mode-specific energy availability data. In this mode, the second allowable pre-defined ranges of deviation of temperatures are farther from the temperature value set by the user for a given space when compared to the first allowable pre-defined ranges of deviation of temperatures. Hence, the temperature changes are significant and deviates more from the temperature values set by the user when compared to the classic mode, upon comparing the current energy-availability data with the average saving mode-specific energy-availability data. An exemplary range of the second allowable pre-defined ranges of deviation of temperatures may be at least twice of the exemplary range of the first allowable pre-defined ranges of deviation of temperatures, when the first and the second allowable pre-defined ranges of deviations of the energy-availability data are similar.

In another instance, the user may assign the saving mode to the given space. The first allowable pre-defined ranges of deviation of temperatures may be from +0.6 degree Celsius up to -3 degrees Celsius. Hence, when comparing the current energy-availability data with the average classic mode-specific energy availability data and determining that the current energy-availability data is any one of: 25% cheaper, then increasing the temperature by 0.6 degree Celsius (i.e., 20+0.6 = 20.6 degrees Celsius); 40% cheaper, then increasing the temperature by 1 degree Celsius (i.e., 20+1 = 21 degrees Celsius); 25% expensive, then decreasing the temperature by 2 degrees Celsius (i.e., 20-2 = 18 degrees Celsius); 40% cheaper, then decreasing the temperature by 3 degrees Celsius (i.e., 20-3 = 17 degrees Celsius).

Optionally, the extreme saving mode deviates the temperature of each of the one or more spaces from the temperature value set by the user corresponding to the average extreme saving mode-specific energy availability data. In this mode, the third allowable pre-defined ranges of deviation of temperatures are farther from the temperature value set by the user for a given space when compared to the second allowable pre-defined ranges of deviation of temperatures. Hence, the temperature changes are significant and deviates more from the temperature values set by the user when compared to the saving mode, upon comparing the current energy-availability data with the average extreme saving mode-specific energy-availability data. An exemplary range of the third allowable pre-defined ranges of deviation of temperatures may be at least thrice of the exemplary range of the first allowable pre-defined ranges of deviation of temperatures, when the first and the third allowable pre-defined ranges of deviations of the energy-availability data are similar.

In yet another instance, the user may assign the extreme saving mode to the given space. The first allowable pre-defined ranges of deviation of temperatures may be from +0.9 degree Celsius up to -4.5 degrees Celsius. Hence, when comparing the current energy-availability data with the average classic mode-specific energy availability data and determining that the current energy-availability data is any one of: 25% cheaper, then increasing the temperature by 0.9 degree Celsius (i.e., 20+0.9 = 20.9 degrees Celsius); 40% cheaper, then increasing the temperature by 1.5 degree Celsius (i.e., 20+1.5 = 21.5 degrees Celsius); 25% expensive, then decreasing the temperature by 3 degrees Celsius (i.e., 20-3 = 17 degrees Celsius); 40% cheaper, then decreasing the temperature by 4.5 degrees Celsius (i.e., 20-4.5 = 15.5 degrees Celsius).

A technical benefit of the one or more temperature-regulation modes is that the temperature of each of the one or more spaces is controlled in a manner to generate savings as per the user's requirement, while the temperature lies within the first, second and third allowable pre-defined ranges of deviation of temperatures.

Optionally, the one or more temperature-regulation modes further comprises an expert mode including a user-defined fourth allowable pre-defined ranges of deviations of the energy-availability data and a fourth allowable pre-defined ranges of deviation of the temperatures, wherein the fourth allowable pre-defined range lies within or outside of the first, second and third allowable pre-defined ranges. Optionally, the expert mode takes into account the spot price of energy for the time period of the day. The expert mode is used to alternate between comfort and savings of the user, based on the spot price of energy. The expert mode can be a combination of at least two of: the classic mode, the saving mode, the expert saving mode. Alternately, the expert mode can be completely user-defined. Optionally, the expert mode comprises the fourth allowable pre-defined ranges of deviation of the temperatures of the energy-availability data from an average expert mode-specific energy-availability data.

For example, for a given space, when the spot price at 2pm may be cheaper by 40% than the spot price at 12 pm, raising the temperature by about +0.3 degrees Celsius. Alternatively, when the spot price at 4 pm may be 25% expensive than the spot price at 12 pm, raising the temperature by about 2 degrees Celsius.

Optionally, the method comprises assigning the temperature-regulation mode from the one or more temperature-regulation modes based on a priority factor defined by a user based on a preferred usage of the one or more spaces. The priority factor is defined by an order of decreasing priorities of the preferred usage of the one or more spaces. The priority factor may be user-defined, pre-defined according to requirements of the user, learnt by the system from prior information, and the like. Optionally, the priority factor can be used to distribute energy within the premises based on usage of the one or more spaces. For example, the priority factor may be: bedroom 1, bedroom 2, living room, garage. Here, the room 1 has highest priority, followed by the room 2, and so on, until the garage which has least priority. Hence, the room 1 is assigned the temperature-regulation mode based on the priority factor. After assigning the temperature-regulation mode to the room 1, the rest of the spaces are assigned the one or more temperature-regulation modes.

Optionally, the method further comprises setting a user-specific pre-determined energy-availability data for the day, and wherein a temperature-regulation mode comprises the allowable pre-defined range of deviation of temperature, from the temperature values set by the user, based on the user-specific pre-determined energy-availability data for the day. Herein, user-specific pre-determined energy-availability data for the day is in a form similar to the mode-specific energy-availability data for the time period of the day. The allowable pre-defined range of deviation of temperature is different from the first, second, third and fourth allowable pre-defined ranges of deviation of temperatures. A technical benefit of setting the user-specific pre-determined energy-availability data is that it provides the user with flexibility to control the temperature of the one or more spaces in a customised manner. Optionally, the one or more spaces to be used is determined for the pre-determined time period of the day. When it is determined that the consumption of energy exceeds the allowable pre-defined range of deviation of the energy-availability data, the user-specific pre-determined energy-availability data is set by the user, to re-define or change the allowable pre-defined range of deviation of temperature, from the temperature values set by the user.

The temperature of the one or more spaces is regulated based on the temperature-regulation modes assigned to each of the one or more spaces. The temperature of each of the one or more spaces is attained within the first, second, third and fourth allowable pre-defined ranges of deviation of temperatures. This happens only when the determined deviation is within the first, second, third and fourth allowable pre-defined range of deviation of the energy-availability data. A technical benefit of regulating the temperature of each of the one or more spaces in such a way is to control the use of energy in the premises, thereby generating savings. Optionally, the temperature of the one or more spaces is regulated by the user-specific pre-determined energy-availability data for the day. This allows the user to have more control over regulation of the temperature.

Optionally, when the current energy-availability data exceeds (or will exceed) any one of the first, second, third and fourth allowable pre-defined ranges of deviation of the energy-availability data, initiating at least one user-predefined function, wherein the user-predefined function is at least one of: generating a user notification or warning regarding exceeded energy-availability data, changing the temperature profile, re-defining the temperature-regulation mode. The user notification or the warning can be generated in the form of an alarm, a text message, an email, a pop-up, and similar. Herein, the user notification or the warning could be generated when at least one of: the amount of energy consumed by a given space, the limit on expenditure on energy for a given space, for the time period of the day, has exceeded. In case this happens, the user is provided with a user notification or a warning to choose the appropriate temperature-regulation mode from the one or more temperature-regulation modes suitable for a given space. Additionally, the temperature values set by the user while defining the temperature profile of the given space can be altered. In an instance, the user notification or the warning may be generated when the temperature of the given space deviates in a way such that the deviation lies outside the first, second, third, or fourth allowable predefined ranges of temperatures. This temperature could be harmful for the premises, for example, such a temperature may cause moisture damage to the given space. In another instance, the user notification or alert may be generated when the energy consumption is high or the forecast for the following day predicts a high price on the basis of the spot price of energy. Based on such notification or warning generated, a default mode of the one or more temperature-regulation modes can be assigned to the given space. The default mode could also be assigned when the user does not immediately respond to the user notification or the warning generated. Herein, the default mode comprises automatically altering the temperature values of the given, controlling the temperature regulating devices, changing the allowable pre-defined ranges of deviation of the energy-availability data and the allowable pre-defined ranges of deviation of the temperatures corresponding to any of the classic mode, the saving mode, the extreme saving mode, or the expert mode.

Optionally, the method further comprises altering the temperature values set by the user for the time period of the day to alter any one of the first, second, third, and fourth allowable pre-defined ranges of deviation of the energy-availability data corresponding to any of the classic mode, the saving mode, the extreme saving mode, or the expert mode. A technical benefit of altering the temperature values set by the user for any of the given temperature-regulation modes is that, the temperature values can be changed based on the variable-space attributes, such as, the weather forecast of the geolocation of the premises. The temperature values can be altered to re-define the temperature value of the one or more spaces.

Optionally, the method comprises storing or accessing at least one of: the temperature profile, the fixed-space attributes, the variable-space attributes, the one or more temperature-regulation modes, at/from a data repository. Herein, the term "*data repository*" refers to a hardware, a software, a firmware, or a combination of these for storing a given information in an organized (namely, structure) manner, thereby, allowing for easy storage, access (namely, retrieval), updating, and analysis of the given information. The data repository may be implemented as a memory of a device, a removable memory, a cloud-based database, or similar. The data repository can be implemented as one or more storage devices. A technical effect of using the data repository is that it provides an ease of storage and access of processing inputs, as well as processing outputs. The data repository allows the user to access any information present in the data repository, when a current information is not available at a given time.

The present disclosure also relates to the system as described above. Various embodiments and variants disclosed above apply *mutatis mutandis* to the method.

The term "*processor*" refers to a computational element that is operable to respond to and process instructions that drive the system. Furthermore, the term "*processor*" may refer to one or more individual processors, processing devices and various elements associated with the processing device that may be shared by other processing devices. Such processors, processing devices and elements may be arranged in various architectures for responding to and executing the steps of the system.

The term "*thermostat*" refers to a device that automatically regulates the temperature of each of the one or more spaces to maintain the temperature at the temperature values set by the user. The plurality of thermostats are operably coupled to the heating and cooling units of the premises, which are used to regulate and maintain the temperature of each of the one or more spaces.

Optionally, when the current energy-availability data is greater than or less than the average mode-specific energy-availability data, the processor is configured to select an allowable temperature value for the plurality of thermostats from within the allowable pre-defined range of deviation of temperature for regulating temperature of each of the one or more spaces.

Optionally, the one or more temperature-regulation modes comprises:
- a classic mode including a first allowable pre-defined ranges of deviations of the energy-availability data and a first allowable pre-defined ranges of deviation of temperatures;
- a saving mode including a second allowable pre-defined ranges of deviation of the energy-availability data and a second allowable pre-defined ranges of deviation of temperatures, wherein the second allowable pre-defined ranges of deviation of temperatures are different (at least twice) of the first allowable pre-defined ranges; and
- an extreme saving mode including a third allowable pre-defined ranges of deviation of the energy-availability data and a third allowable pre-defined ranges of deviation of temperatures, wherein the third allowable pre-defined ranges of deviation of temperatures are different (at least thrice) of the first allowable pre-defined ranges.

Optionally, the one or more temperature-regulation modes further comprises an expert mode including a user-defined fourth allowable pre-defined ranges of deviations of the energy-availability data and a fourth allowable pre-defined ranges of deviation of the temperatures, wherein the fourth allowable pre-defined range lies within or outside of the first, second and third allowable pre-defined ranges.

Optionally, the expert mode can be used so, that when the price (price of energy) is over a pre-defined value, then the consumption of energy is lowered by a certain pre-set value.

Optionally, when the current energy-availability data exceeds any one of the first, second, third and fourth allowable pre-defined ranges of deviation of the energy-availability data, initiating at least one user-predefined function, wherein the user pre-defined function is at least one of: generating a user notification or warning regarding exceeded energy-availability data, changing temperature-regulation mode, changing the temperature profile of the temperature regulation mode, re-defining the temperature-regulation mode.

The method and system according to the invention can be for example be based on electricity pricing (i.e in the system and method of the invention the energy is electric energy, electricity) or might be based on the price of district heating, i.e availability/price of district heating, which price can be like electrical energy pricing, being a variable price (i.e a SPOT price). The system according to the invention can be utilized to heating systems which do rely on district heating or similar. Also, the method and system according to the invention can be practically based on use of any form of energy, i.e not restricted to any specific form of energy.

### DETAILED DESCRIPTION OF THE DRAWINGS

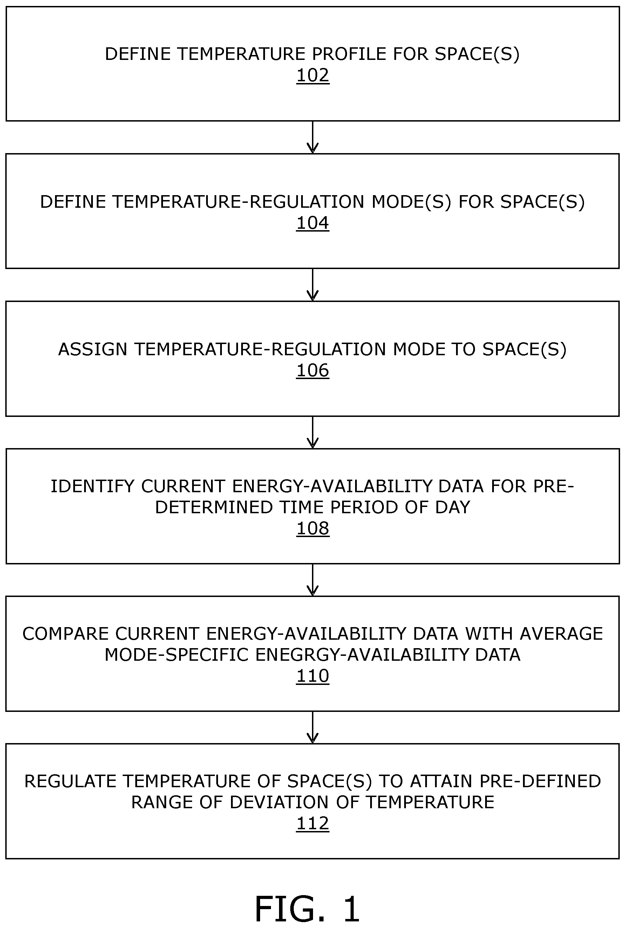

Referring to FIG. 1, there is shown an illustration of a flowchart depicting steps of a method of controlling use of energy in a premises having one or more spaces, in accordance with an embodiment of the present disclosure. At step **102,** a temperature profile is defined, corresponding to temperature values set by a user for a time period of a day, for each of the one or more spaces. At step **104,** one or more temperature-regulation modes are defined for each of the one or more spaces. Herein, each of the one or more temperature-regulation modes comprises an allowable pre-defined range of deviation of an energy-availability data from an average mode-specific energy-availability data, and an allowable pre-defined range of deviation of temperature from the temperature values set by the user, for the allowable pre-defined range of deviation of the energy-availability data. At step **106,** a temperature-regulation mode is assigned from the one or more temperature-regulation modes, to each of the one or more spaces. At step **108,** a current energy-availability data is identified for the pre-determined time period of the day. At step **110,** the current energy-availability data is compared with the average mode-specific energy-availability data to determine a deviation within the allowable pre-defined range of deviation of the energy-availability data. At step **112,** temperature of each of the one or more spaces are regulated to attain the pre-defined range of deviation of temperature based on the determined deviation within the allowable pre-defined range of deviation of the energy-availability data to control the use of energy in the premises.

The aforementioned steps are only illustrative and other alternatives can also be provided where one or more steps are added, one or more steps are removed, or one or more steps are provided in a different sequence without departing from the scope of the claims herein.

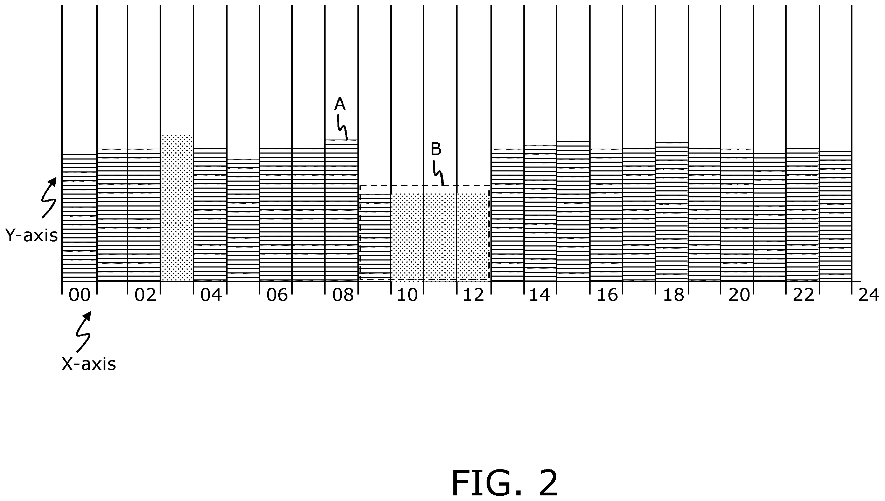

Referring to FIG. 2, there is shown an exemplary temperature profile in a graphical format, in accordance with an embodiment of the present disclosure. The temperature profile is defined for a time period of the day i.e., 24 hours of Wednesday. Herein, X-axis indicates hours of the day, and Y-axis indicates a temperature value set by the user in degree Celsius. The temperature values set by the user may fluctuate on an hourly basis. As shown, the temperature value set by the user at 8 am is 19.5 degrees Celsius (as depicted by a vertical bar labelled A), and between 10 am to 12 pm is 10 degrees Celsius (as depicted by dashed rectangle labelled B).

FIG. 2 is merely an example, which should not unduly limit the scope of the claims herein. A person skilled in the art will recognize many variations, alternatives, and modifications of embodiments of the present disclosure.

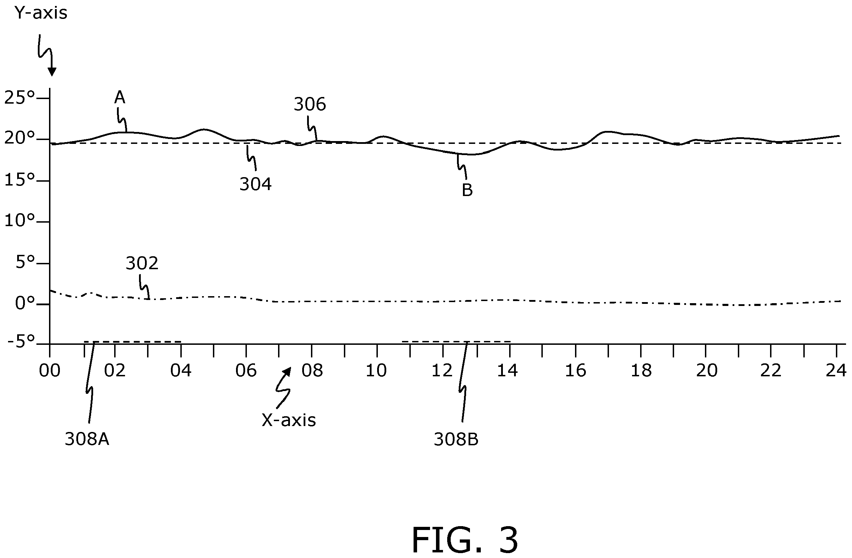

Referring to FIG. 3, there is shown an exemplary case of regulating temperature, in accordance with an embodiment of the present disclosure. A classic mode from one or more temperature-regulation modes is assigned to a given space within a premises. Herein, X-axis indicates hours of a day, and Y-axis indicates a temperature in degree Celsius. Herein, line **302** depicts a temperature outside the premises, line **304** depicts a temperature profile as defined by a user, line **306** depicts regulation of temperature with respect to energy-availability data (as depicted by lines **308A** and **308B).** When a current energy-availability data is greater than or less than an average classic mode-specific energy-availability data, any of: a lower temperature value (as depicted by A), a higher temperature value, than the temperature values set by the user is selected, respectively, from within an allowable pre-defined range of deviation of temperature while heating the given space of the premises.

FIG. 3 is merely an example, which should not unduly limit the scope of the claims herein. A person skilled in the art will recognize many variations, alternatives, and modifications of embodiments of the present disclosure.

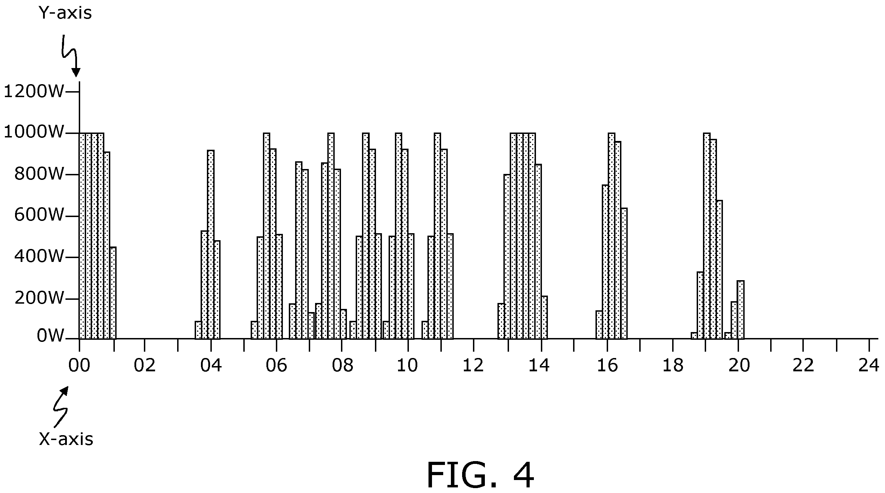

Referring to FIG. 4, there is shown an exemplary histogram of controlling use of energy, in accordance with an embodiment of the present disclosure. A classic mode from one or more temperature-regulation modes is assigned to a given space within a premises. Herein, X-axis indicates hours of a day, and Y-axis indicates power of energy in watt (W). When current energy-availability data (such as, for example, a spot price of energy) is greater than or less than an average mode-specific energy-availability data, temperature of the given space is regulated in a manner so as to consume energy when the spot price is cheap, and to lower the temperature to reduce consumption of energy.

FIG. 4 is merely an example, which should not unduly limit the scope of the claims herein. A person skilled in the art will recognize many variations, alternatives, and modifications of embodiments of the present disclosure.

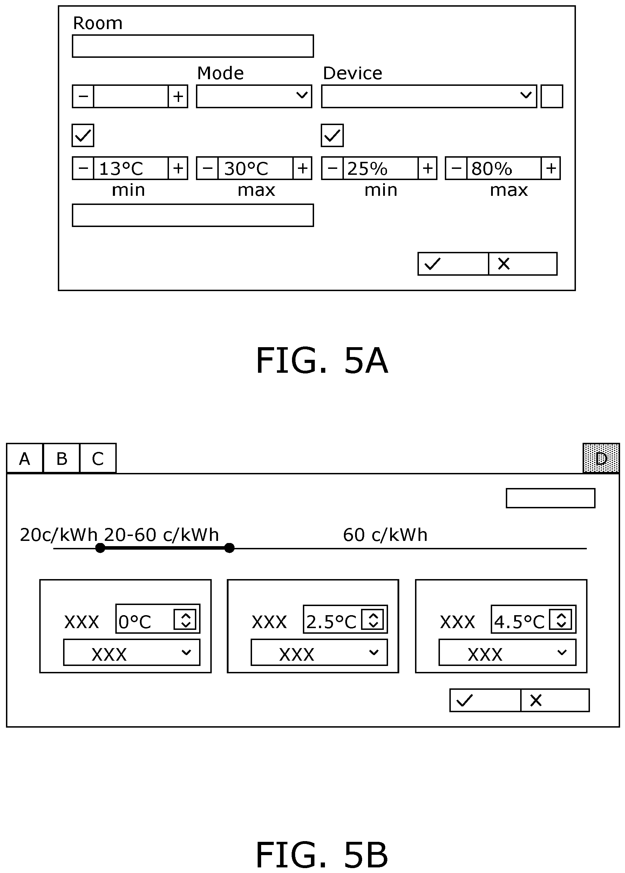

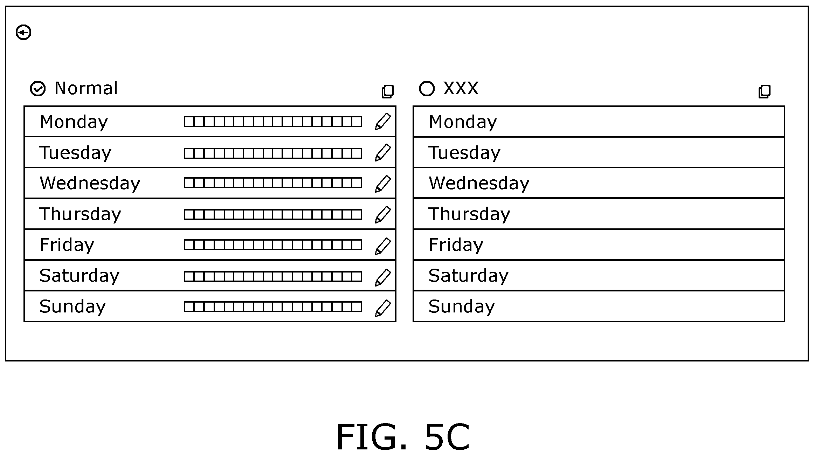

Referring to FIG. 5A, 5B and 5C, there are shown exemplary user interfaces, in accordance with various embodiments of the present disclosure. The user interfaces are used to define one or more temperature-regulation modes. In FIG. 5A, the user interface at least shows a given space, a temperature-regulation mode, a temperature-regulation device, an allowable pre-defined range of deviation of temperature from temperature values set by a user, and similar.

In FIG. 5B, the user interface shows one or more temperature-regulation modes comprising: a classic mode (as depicted by A), a saving mode (as depicted by B), an extreme saving mode (as depicted by C), an expert mode (as depicted by D). The classic mode includes a first allowable pre-defined ranges of deviations of the energy-availability data and a first allowable pre-defined ranges of deviation of temperatures. The saving mode includes a second allowable pre-defined ranges of deviation of the energy-availability data and a second allowable pre-defined ranges of deviation of temperatures, wherein the second allowable pre-defined ranges of deviation of temperatures are different (at least twice) of the first allowable pre-defined ranges. The extreme saving mode includes a third allowable pre-defined ranges of deviation of the energy-availability data and a third allowable pre-defined ranges of deviation of temperatures, wherein the third allowable pre-defined ranges of deviation of temperatures are different (at least thrice) of the first allowable pre-defined ranges. As shown, the expert mode is assigned to a given space. The expert mode includes a user-defined fourth allowable pre-defined ranges of deviations of the energy-availability data and a fourth allowable pre-defined ranges of deviation of the temperatures, wherein the fourth allowable pre-defined range lies within or outside of the first, second and third allowable pre-defined ranges.

In FIG. 5C, temperature values set by the user for time period of the day, or a day of a week can be altered to alter any of the first, second, third and fourth allowable pre-defined ranges of deviation of the energy-availability data corresponding to any of the classic mode, the saving mode, the extreme saving mode, or the expert mode.

FIGs. 5A, 5B and 5C are merely examples, which should not unduly limit the scope of the claims herein. A person skilled in the art will recognize many variations, alternatives, and modifications of embodiments of the present disclosure.

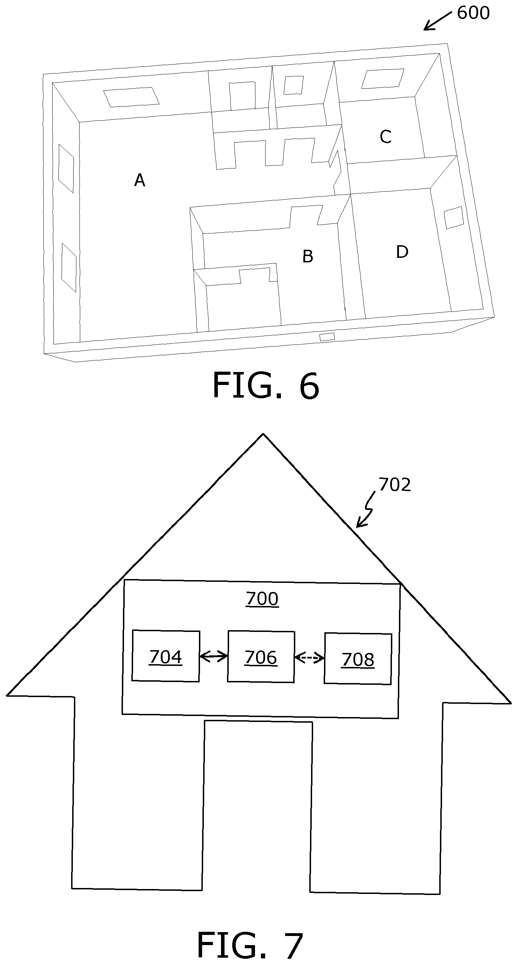

Referring to FIG. 6, there is shown an exemplary floor plan **600** of a premises, in accordance with an embodiment of the present disclosure. The floor plan **600** shows that the premises is divided into four rooms, depicted as room A, room B, room C, and room D. A required temperature in the four rooms A-D may be regulated separately with consideration of how and when each room is used at different times of a day and week. The regulation of temperature depends on a temperature profile defined for the rooms. The temperature profile comprises temperature values set by a user, and depends on a fixed-space attribute and/or a variable-space attribute, of the rooms. The fixed-space attribute may include, but are not limited to, a layout of the premises, a floor plan of the premises, a number of doors and windows in each of the one or more spaces, a dimension of the doors and the windows, a day of a week, a time of the day. The variable-space attribute may include, but are not limited to, a weather forecast for a geolocation of the premises, environment conditions at the geolocation of the premises, a current temperature of the one or more spaces, a number of temperature-regulating devices, a position of the temperature-regulating devices in each of the one or more spaces, a power of temperature-regulating devices, an efficiency of the temperature-regulating devices. For instance, the temperature value set for room A may be 20 degrees Celsius, the temperature value set for room B and room C may be 18 degrees Celsius, and the temperature value set for room D may be 17 degrees Celsius, at a time period of a day. A current temperature of the rooms A-D may be 30 degrees Celsius. 32 degrees Celsius. 28 degrees Celsius. and 35 degrees Celsius, respectively. The room A has three casement windows, the room B has one casement window with two internal doors, room C has one casement window with one internal door, and room D has only one casement window. Herein, the casement windows allow external temperature of the premises to regulate the rooms A-D. The external temperature of the premises may be 20 degrees Celsius. Furthermore, room A is bigger in size than the rooms B-D, the room B is bigger in size than the rooms C-D, and the room C is bigger in size than the room D. Hence, the room A reaches the required temperature faster than the rooms B-D, followed by the room B, followed by the room C, and followed by the room D.

FIG. 6 is merely an example, which should not unduly limit the scope of the claims herein. A person skilled in the art will recognize many variations, alternatives, and modifications of embodiments of the present disclosure.

Referring to FIG. 7, there is shown a block diagram of a system **700** for controlling use of energy in a premises **702** having one or more spaces, in accordance with an embodiment of the present disclosure. The system **700** comprises a processor **704** and a plurality of thermostats (as depicted by a thermostat **706).** The processor **704** is communicably coupled to the thermostat **706.** The thermostat 706 is associated with heating or cooling units (as depicted by a unit **708).**

FIG. 7 is merely an example, which should not unduly limit the scope of the claims herein. A person skilled in the art will recognize many variations, alternatives, and modifications of embodiments of the present disclosure.

## Claims

1. A method for controlling use of energy in a premises having one or more spaces, the method comprising:
- defining a temperature profile, corresponding to temperature values set by a user for a time period of a day, for each of the one or more spaces;
- defining one or more temperature-regulation modes for each of the one or more spaces, wherein each of the one or more temperature-regulation modes comprises:
- an allowable pre-defined range of deviation of an energy-availability data from an average mode-specific energy-availability data, and
- an allowable pre-defined range of deviation of temperature from the temperature values set by the user, for the allowable pre-defined range of deviation of the energy-availability data;
- assigning a temperature-regulation mode from the one or more temperature-regulation modes, to each of the one or more spaces;
- identifying a current energy-availability data for the pre-determined time period of the day;
- comparing the current energy-availability data with the average mode-specific energy-availability data to determine a deviation within the allowable pre-defined range of deviation of the energy-availability data; and
- regulating temperature of each of the one or more spaces to attain the pre-defined range of deviation of temperature based on the determined deviation within the allowable pre-defined range of deviation of the energy-availability data to control the use of energy in the premises.

2. A method according to claim 1, wherein when the current energy-availability data is greater than or less than the average mode-specific energy-availability data, an allowable temperature value is selected from within the allowable pre-defined range of deviation of temperature for regulating temperature of each of the one or more spaces.

3. A method according to any of claim 1 or 2, wherein when the current energy-availability data is greater than or less than the average mode-specific energy-availability data, any of: a lower temperature value, a higher temperature value, than the temperature values set by the user is selected, respectively, from within the allowable pre-defined range of deviation of temperature while heating the one or more spaces of the premises.

4. A method according to any of claim 1 or 2, wherein when the current energy-availability data is greater than or less than the average mode-specific energy-availability data, any of: a higher temperature value, a lower temperature value, than the temperature values set by the user is selected, respectively, from within the allowable pre-defined range of deviation of temperature while cooling the one or more spaces of the premises.

5. A method according to any of the preceding claims, wherein the one or more temperature-regulation modes comprises:
- a classic mode including a first allowable pre-defined ranges of deviations of the energy-availability data and a first allowable pre-defined ranges of deviation of temperatures;
- a saving mode including a second allowable pre-defined ranges of deviation of the energy-availability data and a second allowable pre-defined ranges of deviation of temperatures, wherein the second allowable pre-defined ranges deviation of temperatures are different (at least twice) of the first allowable pre-defined ranges; and
- an extreme saving mode including a third allowable pre-defined ranges of deviation of the energy-availability data and a third allowable pre-defined ranges of deviation of temperatures, wherein the third allowable pre-defined ranges deviation of temperatures are different (at least thrice) of the first allowable pre-defined ranges.

6. A method according to claim 5, wherein the one or more temperature-regulation modes further comprises an expert mode including a user-defined fourth allowable pre-defined ranges of deviations of the energy-availability data and a fourth allowable pre-defined ranges of deviation of the temperatures, wherein the fourth allowable pre-defined range lies within or outside of the first, second and third allowable pre-defined ranges.

7. A method according to any of claim 5 or 6, wherein when the current energy-availability data exceeds any one of the first, second, third and fourth allowable pre-defined ranges of deviation of the energy-availability data, initiating at least one user-predefined function, wherein the user pre-defined function is at least one of: generating a user notification or warning regarding exceeded energy-availability data, changing temperature-regulation mode, changing the profile of the temperature regulation mode, re-defining temperature regulation profile.

8. A method according to claim 7, further comprising altering the temperature values set by the user for the time period of the day to alter any one of the first, second, third and fourth allowable pre-defined ranges of deviation of the energy-availability data corresponding to any of the classic mode, the saving mode, the extreme saving mode, or the expert mode.

9. A method according to any of the preceding claims, wherein assigning the temperature-regulation mode from the one or more temperature-regulation modes is based on a priority factor defined by a user based on a preferred usage of the one or more spaces.

10. A method according to any of the preceding claims, further comprising setting a user-specific pre-determined energy-availability data for the day, and wherein a temperature-regulation mode comprises the allowable pre-defined range of deviation of temperature, from the temperature values set by the user, based on the user-specific pre-determined energy-availability data for the day.

11. A method according to any of the preceding claims, wherein the energy is electric energy, i.e electricity.

12. A system (700) for controlling use of energy in a premises (702) having one or more spaces, the system comprising a processor (704) communicably coupled to a plurality of thermostats (706) associated with heating or cooling units (708) of the premises, wherein the processor is configured to:
- define a temperature profile, corresponding to temperature values set by a user for a time period of a day, for each of the one or more spaces;
- define one or more temperature-regulation modes for each of the one or more spaces, wherein each of the one or more temperature-regulation modes comprises:
- an allowable pre-defined range of deviation of an energy-availability data from an average mode-specific energy-availability data, and
- an allowable pre-defined range of deviation of temperature from the temperature values set by the user, for the allowable pre-defined range of deviation of the energy-availability data;
- assign a temperature-regulation mode from the one or more temperature-regulation modes, to each of the one or more spaces;
- identify a current energy-availability data for the pre-determined time period of the day;
- compare the current energy-availability data with the average mode-specific energy-availability data to determine a deviation within the allowable pre-defined range of deviation of the energy-availability data; and
- regulate temperature of each of the one or more spaces to attain the pre-defined range of deviation of temperature based on the determined deviation within the allowable pre-defined range of deviation of the energy-availability data to control the use of energy in the premises.

13. A system (700) according to claim 12, wherein when the current energy-availability data is greater than or less than the average mode-specific energy-availability data, the processor (704) is configured to select an allowable temperature value for the plurality of thermostats (706) from within the allowable pre-defined range of deviation of temperature for regulating temperature of each of the one or more spaces.

14. A system (700) according to any of the preceding claim 12-13, wherein the one or more temperature-regulation modes comprises:
- a classic mode including a first allowable pre-defined ranges of deviations of an energy-availability data and a first allowable pre-defined ranges of deviation of temperatures;
- a saving mode including a second allowable pre-defined ranges of deviation of an energy-availability data and a second allowable pre-defined ranges of deviation of temperatures, wherein the second allowable pre-defined ranges are different of the first allowable pre-defined ranges; and
- an extreme saving mode including a third allowable pre-defined ranges of deviation of an energy-availability data and a third allowable pre-defined ranges of deviation of temperatures, wherein the third allowable pre-defined ranges are different of the first allowable pre-defined ranges.

15. A system (700) according to any of the preceding claim 12-14, wherein the one or more temperature-regulation modes further comprises an expert mode including a user-defined fourth allowable pre-defined ranges of deviations of the energy-availability data and a fourth allowable pre-defined ranges of deviation of the temperatures, wherein the fourth allowable pre-defined range lies within or outside of the first, second and third allowable pre-defined ranges.

16. A system (700) according to any of the preceding claim 12-15, wherein when the current energy-availability data exceeds any one of the first, second, third and fourth allowable pre-defined ranges of deviation of the energy-availability data, the processor (704) is configured to generate a user notification regarding exceeded energy-availability data.

17. A system (700) according to any of the preceding claim 12-16, wherein the system the energy is electric energy, i.e electricity.
